# EUROPEAN PATENT APPLICATION

(11) **EP 4 432 382 A1**
(43) Date of publication of application: **18.09.2024**
(21) Application number: 23216441.8
(22) Date of filing: 13.12.2023
(51) Int. Cl.: H01M 4/04, H01M 10/04

(54) **APPARATUS FOR MAKING SHEET ELECTRODES**

(30) Priority: 16.03.2023 IT 202300004998
(71) Applicant: G.D S.p.A., 40133 Bologna (BO) (IT)
(72) Inventor: NOFERINI, Giacomo, I-40133 Bologna (BO) (IT)
(74) Representative: Porta & Consulenti Associati S.p.A.

(57) **Abstract**

An apparatus (1) for making sheet electrodes (24), comprising:
- a first transport surface (10) developing along a transport direction (T) between a first inlet (12) and a first outlet (13), configured to transport a continuous électrode plate (11) along the transport direction (T),
- a second transport surface (22) developing along the transport direction (T) between a second inlet (26) and a second outlet, configured to transport sheet électrodes (24) along the transport direction (T),
wherein the first transport direction (10) précèdes in the transport direction (T) the second transport direction (22) and wherein the first outlet (13) and the second inlet (26) are spaced apart from each other along the transport direction (T) by an interspace (52),
- a cutting device (78) configured to eut the continuous électrode plate (11) into sheet électrodes (24), comprising a cutting blade (100) that coopérâtes with a counter-blade (104), said cutting blade (100) and said counter-blade (104) being aligned with a cutting plane (C) perpendicular to the transport direction (T),

wherein the counter-blade (104) is arranged in the interspace (52) and wherein the cutting blade (100) is movable along the cutting plane (C) towards and away from said counter-blade (104),
wherein the cutting blade (100) is further movable in a forward direction (S) parallel to and with direction concordant with the transport direction (T) in order to move the cutting plane (C) along said forward direction (S), and
wherein the first outlet (13) of the first transport surface (10) and the second inlet (26) of the second transport surface (22) are movable along the forward direction (S) in order to displace the interspace (52) and the counter-blade (104) along the forward direction (S) while keeping the counter-blade (104) aligned with the cutting plane (C).

## Description

The present invention refers to an apparatus for making sheet electrodes and a method for making sheet electrodes. In particular, the present invention relates to an apparatus for making sheet electrodes and a method for making sheet electrodes from a continuous electrode plate of conductive material.

The present invention may find application in the realization of electrochemical cells, in particular secondary electrochemical cells, comprising sheet electrodes separated from each other by a continuous dielectric separator or also made of sheets.

Rechargeable type electrochemical cells, also called secondary electrochemical cells, are devices that convert chemical energy into electrical energy with a reversible redox reaction and that convert electrical energy into chemical energy by reversing said redox process.

The secondary electrochemical cells comprise positive and negative electrodes - cathode and anode- arranged alternately one above the other, with a separation layer in dielectric material interposed, indicated in the technical jargon of the sector with the term "separator".

A rechargeable type electric battery includes one or more secondary electrochemical cells connected to each other in series or in parallel. The main applications of secondary electrochemical cells include, for example, lithium-ion rechargeable batteries, nickel-cadmium rechargeable batteries, nickel-metal hydride rechargeable batteries and nickel-hydrogen rechargeable batteries.

The electrochemical cells can assume different structural configurations depending on the specific application. Generally, in smaller capacity electric batteries, secondary cells of a cylindrical or prismatic type, also called jelly roll or Swiss roll, comprising an anode, a cathode and two alternately superimposed separator sheets, rolled on themselves to form a cylindrical or prismatic winding are used.

For larger capacity and size electric batteries, secondary cells obtained by stacking, comprising a thin envelope of generally planar shape containing alternately stacked sheet electrodes and layers of dielectric separator are typically used. An example of this application is the so-called pouch cells.

In the stacking processes, the separator can be inserted between the sheet electrodes with different techniques. The most widely used ones are single sheet stacking, in which sheet electrodes and sheets of separator material are alternately stacked manually or with the aid of a stacking machine, and Z-folding, in which the separator is continuously fed and zig-zag folded while the positive and negative sheet electrodes are inserted between each fold and the next one of the separator tape, creating a multilayer in which the sheet electrodes are separated from each other by a folded portion of the continuous separator tape.

In the industrial processes for producing electrochemical cells in which sheet electrode are used, the latter can be obtained starting from a continuous electrode plate, by means of cutting operations carried out in processing stations located upstream of the station where the stacking takes place.

The operation of cutting the electrodes is one of the most critical in the production processes of secondary battery cells. Irregular cutting edges can in fact lead to misalignments or protrusions of the sheet electrodes with respect to the separator once stacked, with the consequent risk of localised concentrations of electrical voltage. This can cause battery malfunctions, performance degradation and in the worst cases even their explosion.

The sheet electrodes can be obtained starting from continuous electrode plates in various ways, for example by laser engraving or mechanical cutting of the plate.

For example, JP2018073659A discloses an electrode cutting apparatus, configured to cut an electrode material consisting of a long metal plate into individual electrodes during transportation of the plate. The apparatus described herein comprises a pair of support portions supporting the electrode material, extended in the transport direction of the electrode material and spaced apart from each other in a direction perpendicular to the transport direction, and a cutting portion cutting a region of the electrode material in the area comprised between the pair of support portions.

The cutting portion comprises a laser irradiation head that cuts the electrode material by irradiating it perpendicularly to its surface with a laser beam. The laser irradiation head cuts from the electrode material electrode sheets side by side in the transport direction.

In the Applicant's experience, the use of the laser on metal plates may adversely affect the quality of the final electrode. If the laser emission parameters are not adjusted appropriately, the heat developed by the laser can cause localized microfusions of the metal material of which the plate is composed, with the consequent appearance of defects on the cutting edge. The parts of the plate irradiated by the laser can also incur oxidative phenomena, losing conductivity and decreasing battery performance.

In light of this, the Applicant further noted that by employing the cutting apparatus disclosed by JP2018073659A, the production speed of the electrodes could be limited by the need to contain within certain limits the emission power and the advancement speed of the laser along the plate, in order to decrease the incidence of the defects described above.

The Applicant has further noted that the cutting apparatus disclosed by JP2018073659A cuts the electrode sheets from the metal plate by engraving the outline of each sheet with the laser head while the plate is sliding. This way of obtaining the electrode sheets from the metal plate places further limitations on the production efficiency, as the sliding speed of the metal plate must be sufficiently low to allow the laser head to engrave the entire outer edge of each electrode sheet with the precision necessary to obtain electrodes of the desired quality.

WO2022/164209A1 discloses an electric plate cutting device and a relative cutting method.

The cutting device includes a cutting unit formed by a cutting edge positioned above the electrode plate and movable perpendicularly with respect thereto. In the cutting operation, the cutting edge approaches the plate and crosses it placing itself alongside a contact face of a support element of the plate. After cutting, the cut electrode is discharged below into a channel provided downstream of the cutting zone.

The cutting device further includes an electrode plate fixing unit, comprising a gripping element movable perpendicularly to the surface of the plate, configured to fix the plate by pressing it to an underlying base element.

In accordance with this document, the gripping element acts on the electrode plate by fixing its position when the plate is cut, in order to avoid dimensional and/or shape defects of the electrodes caused by unwanted displacements of the plate with respect to the cutting unit while it is operating.

The Applicant has noted that the cutting device described by WO2022/164209A1 provides for the stop of the electrode plate along the transport direction at each cutting operation and the stabilization by means of the aforesaid fixing unit.

The Applicant has observed that the need to stop the advancement of the electrode plate at each cutting operation greatly lengthens the overall processing times, negatively affecting the process efficiency.

Furthermore, in accordance with WO2022/164209A1, at the time of cutting the plate is supported in the area upstream of the cutting edge, downstream of the cutting edge there being provided a channel for discharging the cut electrode. The Applicant has noted that in the absence of appropriate support to the plate in the region immediately downstream of the cutting edge, the plate could lose its planar configuration when subjected to the action of the cutting edge. This might cause deformations of the plate, jams of the device or the formation of irregular cutting edges.

The Applicant has felt the need to make available an electrode cutting apparatus starting from a continuous electrode plate that allows to obtain sheet electrodes of high quality and at higher processing speeds than what is observed in the prior art.

In relation to this need, the Applicant has perceived that the occurrence of defects in the final electrode related to oxidation or localized microfusions of the metal material could be decreased or eliminated, to the advantage of a higher quality of the electrode, avoiding significant increases in temperature of the electrode plate during cutting operations.

The Applicant has also perceived that the occurrence of defects in the electrode linked to deformations or irregularities along the edge could be diminished or eliminated by providing to support the electrode plate in the areas immediately upstream and downstream of the region where the cutting takes place.

The Applicant has also perceived that the quality of the cutting edges of the electrodes could be further increased by avoiding moving, at the time of cutting, the continuous electrode plate with respect to the cutting members.

From the point of view of machining efficiency, the Applicant has however perceived that the machining speed could be increased by operating the cut without the need to stop or slow down the advancement of the electrode plate along the machining line.

The Applicant has found that the needs set out above related to the high cutting precision and the maintenance of a high processing efficiency could be advantageously combined by providing cutting members operating along a plane transverse to the continuous electrode plate and arranged between two supporting and transport surfaces of the plate, said cutting members being able to follow the plate in the transport direction during the cutting operation.

The present invention therefore concerns, in a first aspect thereof, an apparatus for making sheet-shaped electrodes, in short sheet electrodes.

Preferably, said apparatus comprises a first transport direction developing along a transport direction between a first inlet and a first outlet.

Preferably, the first transport direction is configured to transport a continuous electrode plate along the transport direction.

Preferably, said apparatus comprises a second transport direction developing along said transport direction between a second inlet and a second outlet.

Preferably, the second transport direction is configured to transport sheet electrodes along the transport direction.

Preferably, the first transport direction precedes the second transport direction along the transport direction.

Preferably, the first outlet of the first transport direction and the second inlet of the second transport direction are spaced apart along the transport direction by an interspace.

Preferably, said apparatus comprises a cutting device.

The cutting device is preferably configured to cut the continuous electrode plate into sheet electrodes.

Preferably, the cutting device comprises a cutting blade that cooperates with a counter-blade.

Preferably, the cutting blade and the counter-blade are aligned with a cutting plane perpendicular to the transport direction.

Preferably, the counter-blade is arranged in said interspace.

Preferably, the cutting blade is movable along the cutting plane towards and away from the counter-blade.

Preferably, the cutting blade is movable in a forward direction parallel to and with direction concordant with the transport direction in order to move the cutting plane along said forward direction.

Preferably, the first outlet of the first transport surface and the second inlet of the second transport surface are movable along the forward direction in order to displace the interspace and the counter-blade along the forward direction while keeping the counter-blade aligned with the cutting plane.

The Applicant has found that by providing mechanical cutting members, including a cutting blade that cooperates with a counter-blade, undesired temperature increases and oxidative phenomena of the metal material of the continuous electrode plate are avoided, obtaining regular cutting edges free of defects due to oxidation.

The Applicant has further found that by arranging the counter-blade in an interspace between two consecutive transport surfaces adapted to support the continuous electrode plate, and by providing that the blade and the interspace containing the counter-blade are able to follow the advancement movement of the plate along the transport direction, it is possible to operate the cutting of the plate by maintaining a zero relative speed between the blade, the counter-blade and the continuous electrode plate in the transport direction of the latter.

The Applicant has therefore verified that the apparatus for making electrodes according to the first aspect of the invention advantageously allows the plate to be cut by implementing high processing speeds and obtaining a high quality of the final sheet electrodes.

The present invention concerns, in a second aspect thereof, a method for making sheet electrodes.

Preferably, it is provided to transport a continuous electrode plate with a first transport direction between a first inlet and a first outlet of the first transport direction along a transport direction.

Preferably, it is provided to cut said continuous electrode plate along a cutting plane perpendicular to the transport direction to obtain sheet electrodes.

Preferably, it is provided to transport the sheet electrodes with a second transport direction between a second inlet and a second outlet of the second transport direction along the transport direction.

Preferably, the first transport direction precedes, along the transport direction, the second transport direction.

Preferably, the first outlet of the first transport direction and the second inlet of the second transport direction are spaced apart from each other by an interspace.

Preferably, cutting the continuous electrode plate to obtain sheet electrodes is carried out in said interspace between the first outlet of the first transport direction and the second inlet of the second transport direction.

Preferably, cutting said continuous plate to obtain sheet electrodes is implemented by moving the cutting plane in a forward direction parallel to and with direction concordant with the transport direction and by moving the first outlet of the first transport surface and the second inlet of the second transport surface in said forward direction.

The Applicant has found that by providing a blade that cooperates with a counter-blade in a cutting plane perpendicular to the plate while the cutting plane is moved parallel to the transport direction of the plate, it is possible to carry out the cutting while maintaining a zero relative speed between the plate, the interspace containing the counter-blade and the electrode plate.

The Applicant has therefore verified that the method in accordance with the second aspect of the invention allows the electrode plate to be cut accurately and clearly, avoiding the occurrence of edge defects in the final sheet electrodes and without stopping or slowing down the advancement of the plate in the transport direction during cutting, obtaining a high quality of the electrodes while operating at high processing speeds.

In the present description and in the appended claims, with "continuous electrode plate", "electrode plate" or similar expressions is meant a slab having two dimensions much larger than a third dimension. The electrode plate may be a monolithic slab or a slab formed of a plurality of layers joined together of identical material or different materials.

In the present description and in the appended claims, with "interspace", it is intended to indicate a space of discontinuity between the outlet of the first transport direction and the inlet of the second transport direction, such as to allow the passage therein, in a transverse direction with respect to the first and second transport direction, of moving components of the apparatus.

In the present description and in the appended claims, with "amplitude of the interspace", it is intended to indicate its extension in parallel to the transport direction.

In the present description and in the appended claims, with "counter-blade", it is intended to indicate an element adapted to cooperate with the cutting blade to carry out a shear type cut.

In the present description and in the appended claims, the "transport plane" can be identified in an ideal plane containing the transport direction tangent to the first transport direction and to the second transport direction at the first exit of the first transport direction and at the second entrance of the first transport direction. In embodiments in which the first transport direction and the second transport direction are planar and substantially coplanar, the transport plane is identified as a plane containing the first transport direction and the second transport direction. In an operating condition of the apparatus for making sheet electrodes according to the invention, the transport plane is further identified as the plane along which the continuous electrode plate being processed and the sheet electrodes obtained from the plate slide. In this operating condition, the approach of the cutting blade to the transport plane causes an approach of the cutting blade to the continuous electrode plate and/or to the sheet electrode.

In the present description and in the appended claims, the "cutting plane" can be identified in a plane to which the cutting blade and the counter-blade are aligned and along which said cutting blade slides towards and away from the counter-blade.

In the present description and in the appended claims, "upstream", "downstream" and similar expressions refer to a transport direction of the continuous electrode plate and the sheet electrodes obtained therefrom. An "upstream" position with respect to an element or reference point is any position that precedes, in the transport direction, said element or reference point and a "downstream" position with respect to an element or reference point is any position subsequent, in the transport direction, to said element or reference point. Assuming for example a straight transport direction from left to right, as in the case illustrated in the attached figures, an "upstream" position with respect to an element or reference point is any position to the left of said element or reference point and a "downstream" position with respect to an element or reference point is any position arranged to the right of said element or reference point. When such expressions are used with reference to elements or reference points that follow a circular advancement direction or that develop along a closed path, referring for example to a rotation or a clockwise advancement, a "downstream" position with respect to an element or reference point is any position subsequent to said element or reference point and an "upstream" position with respect to an element or reference point is any position preceding said element or reference point.

In the present description and in the appended claims, "outer surface" or "outer side" of a belt conveyor is intended to indicate the surface or the side adapted to contact, in use, the objects to be transported; this side is in particular the one on which the transport surface is defined.

In the present description and in the appended claims, the "inner surface" or "inner side" of a belt conveyor is intended to indicate the side of the conveyor opposite to the aforesaid outer side, i.e. the side that does not contact in use the objects to be transported.

In the present description and in the appended claims, when used with reference to a belt conveyor or a section thereof, the term "length" indicates an extension of the conveyor or of the conveyor section parallel to the transport direction thereof or the transport path thereof.

In the present description and in the appended claims, "above", "below", "upper", "lower" and similar expressions are used with reference to the orientation of the apparatus 1 and its components in the appended figures. The orientation of the apparatus 1 and its components illustrated in the figures is not necessarily the only orientation possible, in use, for the apparatus 1 and its components.

In the present description and in the appended claims, "cutting cycle" is intended to indicate the time interval in which the apparatus carries out a cutting operation on the plate obtaining a sheet electrode, which is repeated in a cyclic manner. For example, this interval can be chosen comprised between the end of a cutting operation (the instant when the cutting blade is in the cutting position and is about to return to the rest position) and the end of the next cutting operation (the subsequent instant when the cutting blade is again in the cutting position and is about to return to the rest position).

The present invention may have, in one or both of its aspects, one or more of the preferred features described below. Such features may be present individually or in combination with each other, unless expressly stated otherwise, both in the apparatus and in the method of the present invention.

Within the context of the present description and following claims, all the numerical magnitudes indicating quantities, parameters, percentages, and so on are to be considered preceded in every circumstance by the term "about" unless indicated otherwise.

Preferably, the first transport direction and the second transport direction are contained in the transport plane.

Preferably, the second transport direction is configured to transport the continuous electrode plate along the transport direction, prior to each cutting operation.

Preferably, the cutting blade is movable parallel to a return direction that is opposite with respect to the forward direction in order to move the cutting plane along said return direction.

Preferably, the first outlet of the first transport surface and the second inlet of the second transport surface are movable along the return direction in order to displace the interspace and the counter-blade along said return direction while keeping the counter-blade aligned with the cutting plane.

Preferably, said apparatus comprises a movable equipment.

Preferably, said movable equipment is configured to shift along said forward direction, parallel and towards the transport direction, between a first end position to a second end position.

Preferably, said movable equipment is slidably constrained to a main frame of the apparatus, preferably arranged in a fixed position.

Preferably, the first end position and the second end position are defined between the first inlet of the first transport direction and the second outlet of the second transport direction.

Preferably, the first end position is closer to the first inlet of the first transport direction than to the second end position.

Preferably, the cutting blade and the counter-blade are fixed to the movable equipment so as to shift integrally therewith in the forward direction and in the return direction.

Preferably, the first transport direction has a first variable length.

Preferably, the second transport direction has a second variable length.

Preferably, the first length of the first transport direction is minimum and the second length is maximum when the movable equipment is at the first end position.

Preferably, the first length of the first transport direction is maximum and the second length of the second transport direction is minimum when the movable equipment is at the second end position.

The provision of a first transport direction and a second transport direction whose lengths vary in a conjugate manner allows the displacement of the interspace to be followed, maximising the rest and transport area of the plate.

Preferably, the first transport direction is supported by a first roller rotatable about a first axis of rotation.

Preferably, said first axis is parallel to the transport plane and perpendicular to a direction parallel to the transport direction.

Preferably, the second transport direction is supported by a second roller rotatable about a second axis of rotation.

Preferably, said second axis of rotation is parallel to the transport plane and perpendicular to a direction parallel to the transport direction.

Preferably, the first roller supports the first transport direction at its first outlet.

Preferably, the second roller supports the second transport direction at its second inlet.

Preferably, said interspace is defined in the transport direction between said first roller and said second roller.

Preferably, the first roller and the second roller are rotatably fixed to the movable equipment, so as to shift integrally therewith in the forward direction and in the return direction.

Preferably, a distance between the first axis of rotation of the first roller and the second axis of rotation of the second roller is fixed.

Preferably, the first roller and the second roller are arranged symmetrically with respect to the cutting plane.

Preferably, said interspace has a fixed minimum amplitude, measured parallel to the transport direction.

Preferably, said apparatus comprises a third roller rotatable about a third axis of rotation.

Preferably, said third axis of rotation is parallel to the transport plane and perpendicular to a direction parallel to the transport direction.

Preferably, said apparatus comprises a fourth roller rotatable about a fourth axis of rotation.

Preferably, said fourth axis of rotation is parallel to the transport plane and perpendicular to a direction parallel to the transport direction.

Preferably, the first transport direction is supported by said third roller at its first inlet.

Preferably, the second transport direction is supported by said fourth roller at its second outlet.

Preferably, the third roller is rotatably mounted on a main frame.

Preferably, the fourth roller is rotatably mounted on said main frame.

Preferably, the first axis of the first roller, the second axis of the second roller, the third axis of the third roller and the fourth axis of the fourth roller are contained in a same plane parallel to the transport plane.

Preferably, said apparatus comprises at least a belt conveyor wound in a closed loop.

Preferably, said at least one conveyor comprises a first active branch extended between said first inlet and said first outlet of the first transport direction.

Preferably, the first transport direction is defined on said first active branch of the at least one conveyor.

Preferably, the at least one conveyor comprises a second active branch extended between said second inlet and said second outlet of the second transport direction.

Preferably, the second transport direction is defined on said second active branch of the at least one conveyor.

Preferably, said at least one conveyor comprises at least one return branch extended between the first inlet of the first transport direction and the second outlet of the second transport direction.

Preferably, the at least one conveyor is in engagement with said first roller and with said third roller at junctions between said first active branch and said at least one return branch.

Preferably, the at least one conveyor is in engagement with said second roller and with said fourth roller at junctions between said second active branch and said at least one return branch.

Preferably, the first roller, the second roller, the third roller and the fourth roller engage an inner surface of the at least one conveyor.

Preferably, the apparatus comprises an electrode plate retention system.

Preferably, said retention system is configured to keep the electrode plate and/or the sheet electrodes adhered to the at least one conveyor.

Preferably, said retention system is configured to act on the at least one conveyor at said first transport direction and said second transport direction.

Preferably, said retention system comprises through suction holes distributed on at least a section of the at least one conveyor.

Preferably, said retention system comprises one or more suction modules in fluid communication with said suction holes and configured to generate a vacuum at said suction holes.

Preferably, a first distance between the third axis of the third roller and the first axis of the first roller is variable.

Preferably, a second distance between the second axis of the second roller and the fourth axis of the fourth roller is variable.

Preferably, said first distance is minimum and said second distance is maximum when the movable equipment is at the first end position.

Preferably, said first distance is maximum and said second distance is minimum when the movable equipment is at the first end position.

In some embodiments, said at least one conveyor includes a first belt conveyor wound in a closed loop and a second belt conveyor wound in a closed loop, distinct and separate from the first conveyor.

Preferably, the first conveyor follows a first closed-loop transport path.

Preferably, the second conveyor follows a second closed-loop transport path.

Preferably, the first conveyor comprises said first active branch extended between said first inlet and said first outlet of the first transport direction.

Preferably, the first transport direction is defined on said first active branch of the first conveyor.

Preferably, the second conveyor comprises said second active branch extended between said second inlet and said second outlet of the second transport direction.

Preferably, the second transport direction is defined on said second active branch of the second conveyor.

Preferably, the first conveyor comprises a first return branch continuously joined to said first active branch at the first inlet and the first outlet of the first transport direction.

Preferably, the second conveyor comprises a second return branch continuously joined to said second active branch at the second inlet and the second outlet of the second transport direction.

Preferably, the first conveyor is in engagement with said first roller and with said third roller at junctions between said first active branch and said first return branch.

Preferably, said first roller is placed downstream of the third roller along the first transport path.

Preferably, the second conveyor is in engagement with said second roller and with said fourth roller at junctions between said second active branch and said second return branch.

Preferably, said fourth roller is placed downstream of the second roller along the second transport path.

Preferably, said apparatus comprises a fifth roller rotatable about a fifth axis of rotation.

Preferably, said apparatus comprises a sixth roller rotatable about a sixth axis of rotation.

Preferably, the fifth axis of rotation is parallel to the transport plane and perpendicular to a direction parallel to the transport direction.

Preferably, the sixth axis of rotation is parallel to the transport plane and perpendicular to a direction parallel to the transport direction.

Preferably, the fifth roller and the sixth roller are rotatably fixed to the movable equipment, so as to shift integrally therewith in the forward direction and in the return direction.

Preferably, the fifth axis of the fifth roller and the sixth axis of the sixth roller are contained in a same plane parallel to the transport plane.

Preferably, the fifth roller engages the first conveyor at its first return branch.

Preferably, the fifth roller engages an outer surface of the first conveyor.

Preferably, the sixth roller engages the second conveyor at its second return branch.

Preferably, the sixth roller engages an outer surface of the second conveyor.

Preferably, said fifth roller is placed downstream of the third roller along the first transport path.

Preferably, said sixth roller is placed downstream of the fourth roller along the second transport path.

Preferably, a distance between the fifth axis of rotation of the fifth roller and the sixth axis of rotation of the sixth roller is greater than the distance between the first axis of rotation of the first roller and the second axis of rotation of the second roller.

Preferably, the fifth roller and the sixth roller are arranged symmetrically with respect to the cutting plane.

Preferably, said apparatus comprises a seventh roller rotatable about a seventh axis of rotation.

Preferably, the seventh axis of rotation is parallel to the transport plane and perpendicular to a direction parallel to the transport direction.

Preferably, said apparatus comprises an eighth roller rotatable about an eighth axis of rotation.

Preferably, the eighth axis of rotation is parallel to the transport plane and perpendicular to a direction parallel to the transport direction.

Preferably, the seventh roller is rotatably mounted on the movable equipment.

Preferably, the eighth roller is rotatably mounted on the movable equipment.

Preferably, the seventh axis of the seventh roller and the eighth axis of the eighth roller are contained in a same plane parallel to the transport plane.

Preferably, the seventh roller engages the first conveyor at its first return branch.

Preferably, the seventh roller engages the inner surface of the first conveyor.

Preferably, the eighth roller engages the second conveyor at its second return branch.

Preferably, the eighth roller engages the inner surface of the second conveyor.

Preferably, said seventh roller is placed downstream of the fifth roller along the first transport path.

Preferably, said eighth roller is placed downstream of the sixth roller along the second transport path.

Preferably, a distance between the seventh axis of rotation of the seventh roller and the eighth axis of rotation of the eighth roller is smaller than the distance between the fifth axis of rotation of the fifth roller and the sixth axis of rotation of the sixth roller.

Preferably, the distance between the seventh axis of rotation of the seventh roller and the eighth axis of rotation of the eighth roller is greater than the distance between the first axis of rotation of the first roller and the second axis of rotation of the second roller.

Preferably, the seventh roller and the eighth roller are arranged symmetrically with respect to the cutting plane.

Preferably, the first return branch of the first conveyor comprises a first folded section extended between the first roller and the fifth roller.

Preferably, said first folded section comprises a portion wound around the fifth roller and an extended portion substantially parallel to the first active branch.

Preferably, said first folded section has a length and orientation with respect to the transport plane that are fixed.

Preferably, the first return branch of the first conveyor comprises a first buffer section with variable length, configured to compensate for length variations of the first active branch of the first conveyor.

Preferably, said first buffer section extends downstream of said fifth roller.

Preferably, said first buffer section is extended between the fifth roller and the seventh roller.

Preferably, the second return branch of the second conveyor comprises a second folded section extended between the second roller and the sixth roller.

Preferably, said second folded section comprises a portion wound around the sixth roller and an extended portion substantially parallel to the second active branch.

Preferably, said second folded section has a length and orientation with respect to the transport plane that are fixed.

Preferably, the second return branch of the second conveyor comprises a second buffer section with variable length, configured to compensate for length variations of the second active branch of the second conveyor.

Preferably, said second buffer section extends upstream of said sixth roller.

Preferably, said second buffer section is extended between the sixth roller and the eighth roller.

Preferably, said apparatus comprises a ninth roller rotatable about a ninth axis of rotation.

Preferably, the ninth axis of rotation is parallel to the transport plane and perpendicular to a direction parallel to the transport direction.

Preferably, said apparatus comprises a tenth roller rotatable about a tenth axis of rotation.

Preferably, the tenth axis of rotation is parallel to the transport plane and perpendicular to a direction parallel to the transport direction.

Preferably, the ninth roller is rotatably mounted on the main frame.

Preferably, the tenth roller is rotatably mounted on the main frame.

Preferably, the ninth roller engages the first conveyor at its first return branch.

Preferably, the ninth roller engages the inner surface of the first conveyor.

Preferably, the tenth roller engages the second conveyor at its second return branch.

Preferably, the tenth roller engages the inner surface of the second conveyor.

Preferably, said ninth roller is placed downstream of the seventh roller and upstream of the third roller along the first transport path.

Preferably, said tenth roller is placed downstream of the eighth roller along the second transport path and upstream of the second roller along the second transport path.

Preferably, said apparatus comprises first drive members configured to move the first conveyor along the first transport path.

Preferably, said first drive members include one or more electric motors.

Preferably, said first drive members are acting on at least one of the third roller, the seventh roller and the ninth roller.

More preferably, said first drive members are acting on the seventh roller.

Preferably, the third roller, the fifth roller and the ninth roller are idle rollers.

Preferably, said first drive members are controlled to impose on the first conveyor a constant transport speed.

Preferably, said apparatus comprises second drive members configured to move said second conveyor along the second transport path.

Preferably, said second drive members include one or more electric motors.

Preferably, said second drive members are acting on at least one of the fourth roller, the eighth roller and the tenth roller.

More preferably, said second drive members are acting on the eighth roller.

Preferably, the fourth roller, the sixth roller and the tenth roller are idle rollers.

Preferably, said second drive members are controlled synchronously with respect to said first drive members, at least during each cutting operation.

Preferably, said second drive members are controlled to impose on the second conveyor a periodic speed profile.

Preferably, said periodic speed profile is variable in the cutting cycle.

Preferably, said periodic speed profile includes a first phase of accelerated motion followed by a second phase at said constant transport speed.

Preferably, a duration of the phase of accelerated motion is preferably comprised between 0% and 50%, more preferably between 0% and 20%, even more preferably between 0% and 10% of the total duration of the cutting cycle.

Preferably, said apparatus comprises third drive members configured to move the movable equipment along the forward direction and along the return direction.

Preferably, said third drive members are controlled synchronously with said first drive members and said second drive members.

Preferably, said third drive members are controlled to impose on the movable equipment said constant transport speed for at least one path section followed by the movable equipment in the forward direction.

Said path section preferably includes an operating position of the movable equipment at which the continuous electrode plate is cut.

Preferably, said third drive members comprise one or more electric motors operatively associated with a first transmission kinematic mechanism, preferably including a crank drive.

Preferably, said cutting blade is configured to shift along said cutting plane between a rest position and a cutting position.

Preferably, the cutting blade comprises a first contact face extended in the cutting plane and preferably facing towards the return direction opposite to the forward direction.

Preferably, the counter-blade comprises a second contact face extended in the cutting plane and facing towards the forward direction.

Preferably, the first contact face of the cutting blade is configured to contact, when in the cutting position, the second contact face of the counter-blade.

Preferably, the cutting blade comprises a cutting profile contained in the cutting plane.

Preferably, the cutting profile inferiorly delimits said first contact face.

Preferably, the cutting profile is straight.

Preferably, the cutting profile is oblique with respect to the transport plane.

Preferably, at said rest position the cutting blade is located on a first side with respect to the transport plane.

Preferably, at said cutting position at least part of the cutting blade, more preferably the entire cutting profile, is located on a second side with respect to the transport plane.

Preferably, at said cutting position the cutting blade, more preferably its first contact face, is crossed by the transport direction.

Preferably, at said cutting position at least part of the cutting blade, more preferably of its first contact face, is close to or in contact with the counter-blade.

Preferably, the counter-blade comprises an upper edge contained in or substantially flush with the transport plane.

Preferably, the counter-blade is arranged in a fixed position with respect to the movable equipment.

Preferably, said apparatus comprises a lead-in surface for the continuous electrode plate.

Preferably, said lead-in surface is arranged in said interspace between the first transport direction and the second transport direction.

Preferably, said lead-in surface extends parallel to the transport plane.

Preferably, said lead-in surface is contained in or substantially flush with the transport plane.

Preferably, said lead-in surface is substantially flush with the upper edge of the counter-blade.

Preferably, said apparatus comprises fourth drive members configured to move the cutting blade along the cutting plane between the rest position and the cutting position.

Preferably, said fourth drive members are controlled synchronously with said first drive members, said second drive members and said third drive members.

Preferably, said third drive members comprise one or more electric motors operatively associated with a second transmission kinematic mechanism, preferably including a crank drive.

Preferably, said third drive members and the fourth drive members are controlled synchronously so that at each cutting cycle the cutting blade is in the cutting position at the instant when the movable equipment, in particular the cutting plane, is at said operating position along the forward direction.

Preferably, said first drive members, said second drive members and said third drive members are controlled synchronously so as to move the first conveyor, the second conveyor and the movable equipment at zero relative speed for at least said path section followed by the movable equipment in the forward direction, said path section preferably including said operating position of the movable equipment.

Preferably, transporting said continuous electrode plate with the first transport direction is implemented by moving the first transport direction at said constant transport speed in the transport direction.

Preferably, cutting the continuous electrode plate is implemented while the movable equipment shifts in the forward direction between the first end position and the second end position.

Preferably, said method comprises moving integrally in the forward direction said cutting plane, and therefore said cutting blade and said counter-blade, said first outlet and said second inlet at said constant transport speed for at least one path section followed by the cutting plane along the forward direction, said path section preferably including said operating position.

Preferably, cutting said continuous electrode plate is implemented by moving integrally in the forward direction, at said constant transport speed, said cutting plane, and then said cutting blade and said counter-blade, said first outlet and said second inlet.

Preferably, cutting the continuous electrode plate is implemented by moving the cutting blade along the cutting plane from the rest position to the cutting position while the cutting plane moves in the forward direction at said constant transport speed.

Preferably, cutting the continuous electrode plate comprises sliding the first contact face of the cutting blade along the second contact face of the counter-blade.

Further characteristics and advantages of the present invention will become clearer from the following detailed description of a preferred embodiment thereof, with reference to the appended drawings and provided by way of indicative and non-limiting example, in which:
- figure 1 is a perspective view of an apparatus for making sheet electrodes for producing electrochemical cells according to a preferred embodiment of the invention;
- figure 2 is a front view of the apparatus of figure 1;
- figure 3 is a partial perspective view of some components of the apparatus of figure 1;
- figure 4 is a view of some components of the apparatus of figure 1, with some elements removed for illustrative clarity's sake;
- figures 5 and 6 are partial perspective views of some components of the apparatus of figure 1; and
- figures 7 to 10 are schematic views of an apparatus according to the present invention in different operating configurations.

The representations in the accompanying figures do not necessarily have to be understood in scale and do not necessarily respect the proportions between the various parts. In the figures, the same or similar elements of different embodiments will be indicated by the same reference numerals.

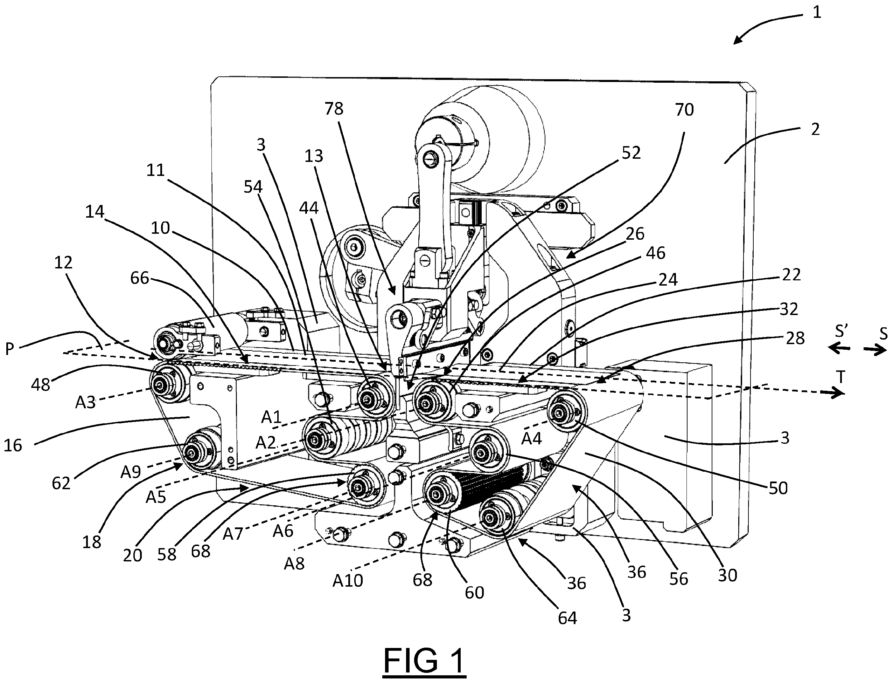

With reference to the attached figures 1-6, an apparatus for making sheet electrodes, usable in the production of electrochemical cells, in accordance with a first preferred embodiment of the invention is now described. The apparatus is indicated in the figures with reference numeral 1.

The apparatus 1 can be adopted in a production line of rechargeable battery cells, in which the sheet electrodes, obtained by cutting a continuous electrode plate in the manner that will be detailed below, are subsequently picked up and fed to a forming station for an electrochemical cell in which they are stacked with interposition of a dielectric separator, for example by single sheet stacking, or by Z-folding).

The components of the apparatus 1 are mounted on a main frame 2. In the case shown in the figures, the main frame 2 is dedicated only to the apparatus 1 for making sheet electrodes, but in embodiments not illustrated the main frame 2 can integrate further components of a more extensive manufacturing line, for example of the aforesaid rechargeable battery cell production line. The main frame 2 can for example support, downstream of the cutting apparatus 1, components of an electrochemical cell forming station including gripping and stacking members of the sheet electrodes with interposition of a dielectric separator.

The apparatus 1 comprises a first transport direction 10 adapted to support and transport along a transport direction T a continuous electrode plate 11.

The continuous electrode plate 11 comprises for example a thin metal layer coated on one or both sides with an electrochemically active material.

The first transport direction 10 of the apparatus 1 comprises a first inlet 12, at which the plate 11 is introduced into the apparatus 1, and a first outlet 13, at which the plate 11 exits the first transport direction 10.

The plate 11 can be transported from further upstream processing stations as far as the apparatus 1 by means of suitable movement members not illustrated, or it can be unwound from a storage reel, also not illustrated, located upstream of the first inlet 12 of the first transport surface 10.

The first transport direction 10 has a planar development parallel to the transport direction T of the plate 12. The first transport direction 10 is defined on a first conveyor 16 of the belt type, and in particular on a first active branch 14 thereof.

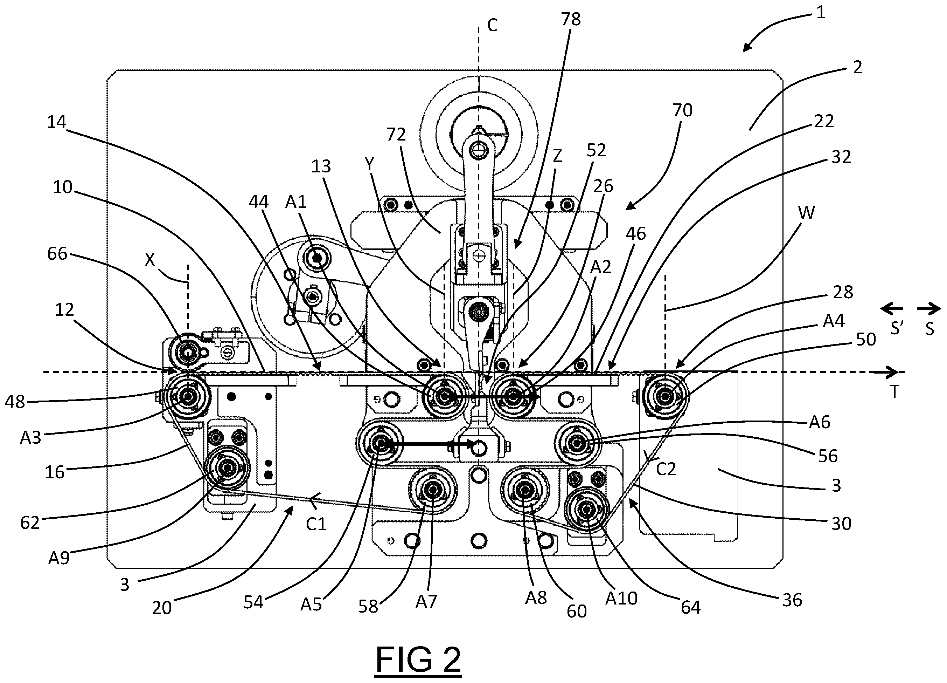

The first conveyor 16 is a closed-loop belt defining a first closed-loop transport path C1, schematically indicated in figure 2 by an arrow along the side profile of the first conveyor 16. Along the first transport path C1, the aforesaid first active branch 14 of the first conveyor 16, at which the active transport of the continuous electrode plate 12 takes place, and a first return branch 20 of the first conveyor 16 continuously joined to the first active branch 14 are defined.

As shown in figure 2, the first conveyor 16 follows the first transport path C1 clockwise. At the first active branch 14, the first transport path C1 followed by the first conveyor 16, and in particular by the first transport direction 10, coincides with the transport direction T. In use, the continuous electrode plate 11 (shown in figure 1) is then advanced in the transport direction T, from left to right in the figures, by the first transport direction 10 between its first inlet 12 and its first outlet 13.

The apparatus 1 comprises a second transport direction 22 adapted to support and transport along the transport direction T the continuous electrode plate 12 and, subsequently to the plate 12 cutting operation that will be described later, a sheet electrode 24 obtained from the plate 11 (as in the situation illustrated in figure 1).

The second transport direction 22 comprises a second inlet 26, at which the plate 12 exiting the first transport direction 10 accesses the second transport direction 22, and a second outlet 28, at or near which the sheet electrode 24 obtained by cutting from the plate 11 exits the second transport direction 22. For example, suitable gripping members (not illustrated) can be provided which grip the sheet electrode 24 near the second outlet 28 and feed it to a subsequent electrochemical cell stacking and forming station (not illustrated).

Like the first transport direction 10, the second transport direction 22 also has a planar development parallel to the transport direction T of the plate 12. The second transport direction 22 is subsequent to the first transport direction 10 in the transport direction T. In the preferred embodiment of figures 1-6, the first transport direction 10 and the second transport direction 22 are contained in a same transport plane P, schematically represented in figure 1. The transport plan P includes the transport direction T.

The second transport direction 22 is defined on a second belt conveyor 30, and in particular on a second active branch 32 thereof.

The second conveyor 30 is a closed-loop belt defining a second closed-loop transport path C2, schematically indicated in figure 2 by an arrow along the side profile of the second conveyor 30. Along the second transport path C2, the aforesaid second active branch 32 of the second conveyor 30, at which the active transport of the continuous electrode plate 12 takes place and, after cutting, the sheet electrodes 24 obtained from the plate 12 are defined. A second return branch 36 of the second conveyor 30 continuously joined to the second active branch 32 along the second transport path C2 is also defined.

As shown in figure 2, the second conveyor 30 follows the second transport path C2 clockwise. At the second active branch 32, the second transport path C1 followed by the second conveyor 30, and therefore by the second transport direction 22, coincides with the transport direction T. In use, the continuous electrode plate 12 and/or the sheet electrode 24 obtained therefrom are then advanced in the transport direction T by the second transport direction 22 between its second inlet 26 and its second outlet 28.

Preferably, there is provided a retention system 38 which is adapted to ensure the adhesion of the plate 11 and the sheet electrodes 24 to the first conveyor 16 and to the second conveyor 30 during transport.

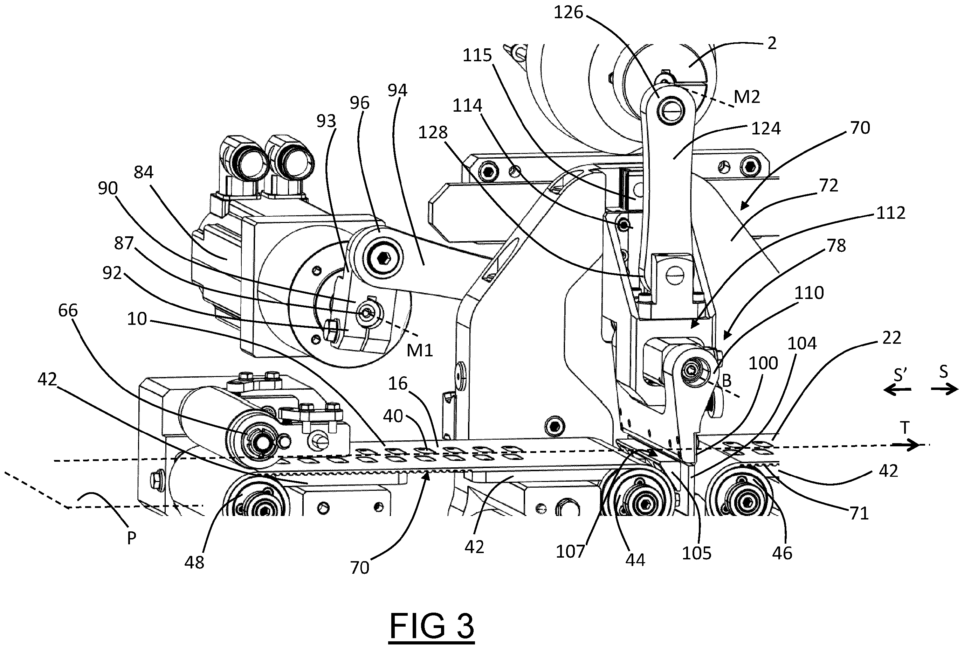

The retention system 38 includes through suction holes 40, distributed on the first conveyor 16 and on the second conveyor 30 (visible for example in figures 3 and 5-6, from which the plate 11 has been omitted to make the first and second transport surface 10, 22 visible). The retention system 38 further includes suction modules 42 arranged inferiorly to the first conveyor 16 and to the second conveyor 30 at the first active branch 14 and the second active branch 32, respectively. The suction modules 42 are operatively connected to vacuum blowers (not visible) adapted to create a vacuum at the suction holes 40, such as to let the plate 11 and/or the sheet electrode 24 adhere to the first conveyor 16 and to the second conveyor 30 in the transport.

The first conveyor 16 and the second conveyor 30 are supported and transported along the respective first and second transport paths C1, C2 by a plurality of movement rollers, which will be referred to as a whole with reference 18 (indicated in figure 1).

The movement rollers 18 comprise a first roller 44, a second roller 46, a third roller 48 and a fourth roller 50, rotatable about respective axes of rotation indicated in figure 1 by the references A1, A2, A3, A4. The axes of rotation A1, A2, A3, A4 respectively of the first roller 44, the second roller 46, the third roller 48 and the fourth roller 50 are arranged parallel to the transport plane P and perpendicular to a direction parallel to the transport direction T. The first roller 44, the second roller 46, the third roller 48 and the fourth roller 50 are aligned with each other along a direction parallel to the transport direction T.

The first roller 44 and the third roller 48 support and engage the first conveyor 16 at junctions between the first active branch 14 and the first return branch 20. The first roller 44 and the third roller 48 engage an inner surface of the first conveyor 16.

The first roller 44 engages the first conveyor 16 at the first outlet 13 of the first transport direction 10. The third roller 48 engages the first conveyor 16 at the first inlet 12 of the first transport direction 10. The first roller 44 is arranged downstream of the third roller 48 along the first transport path C1.

The first active branch 14 and the first return branch 20 of the first conveyor 16 are joined to each other at one of a plane X and at a plane Y perpendicular to the transport plane T, schematically indicated in figure 2. The plane X contains the axis of rotation A3 of the third roller 48. The plane Y contains the axis of rotation A1 of the first roller 44.

The first active branch 14 of the first conveyor 16, on which the first transport direction 10 is defined, preferably corresponds to the portion of the first conveyor 16 extended along the transport direction T between the plane X and the plane Y.

The first return branch 20 of the first conveyor 16 preferably corresponds to the remaining portion of the first conveyor 16 extended along the first transport path C1 between the plane Y and the plane X.

The second roller 46 and the fourth roller 50 support and engage the second conveyor 30 at junctions between the second active branch 32 and the second return branch 36. The second roller 46 and the fourth roller 50 engage the inner surface of the second conveyor 30.

The second roller 46 engages the second conveyor 30 at the second inlet 26 of the second transport direction 14. The fourth roller 50 engages the second conveyor 30 at the second outlet 28 of the second transport direction 22. The fourth roller 50 is arranged downstream of the second roller 46 along the second transport path C2.

The second active branch 32 and the second return branch 36 are joined to each other at a plane Z and at a plane W perpendicular to the transport plane T, schematically indicated in figure 2. The plane Z contains the axis of rotation A2 of the second roller 46. The plane W contains the axis of rotation A4 of the fourth roller 44.

The second active branch 32 of the second conveyor 30, on which the second transport direction 22 is defined, preferably corresponds to the portion of the second conveyor 30 extended along the transport direction T between the plane Z and the plane W.

The second return branch 36 of the second conveyor 30 preferably corresponds to the remaining portion of the second conveyor 30 extended along the second transport path C2 between the plane W and the plane Z.

Advantageously and according to the invention, an interspace 52 is defined between the first transport direction 10 and the second transport direction 22. The first transport direction 10 and the second transport direction 22 are separated from each other and spaced apart in the transport direction T by said interspace 52.

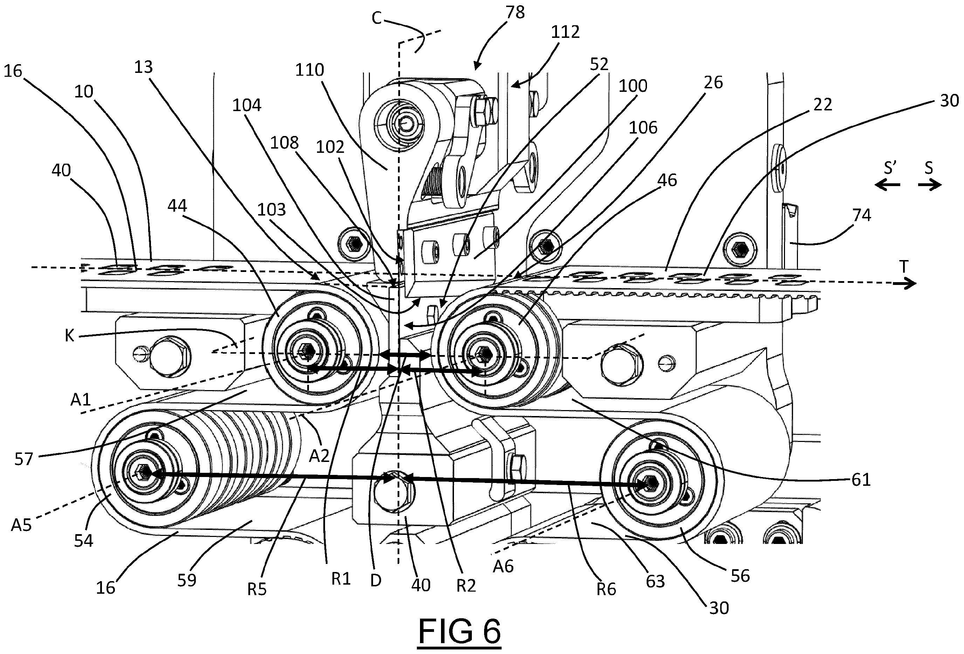

More particularly, the interspace 52 separates in the transport direction T the second roller 46 from the first roller 44. As can be seen in figure 6, the interspace 52 is delimited in the transport direction by the curved portion of the first conveyor 16 wound on the first roller 44 and by the curved portion of the second conveyor 30 wound on the second roller 46.

The first roller 44 and the second roller 46 are arranged in a fixed position with respect to each other. Consequently, the interspace 52 has a shape and amplitude, evaluated parallel to the transport direction T, which are not variable.

A minimum amplitude D of the interspace 52 is defined at a plane K, schematically indicated in figure 6, containing the axis A1 of the first roller 44 and the axis A2 of the second roller 46. This minimum amplitude D corresponds to the distance, measured along the plane K parallel to the transport direction T, between the curved portion of the first conveyor 16 wound on the first roller 44 and the curved portion of the second conveyor 30 wound on the second roller 46.

Within said interspace 52 a cutting plane C (figure 6) is defined along which a cutting device 78 of the apparatus 1 is operational. The cutting plane is preferably placed in the centre of the interspace 52, in other words at a distance D/2, evaluated along said plane K, from the curved portion of the first conveyor 16 wound on the first roller 44 and from the curved portion of the second conveyor 30 wound on the second roller 46. The cutting plane C is perpendicular to the transport direction T. The cutting device 78, described in detail below, is configured to separate, with each successive cutting operation, a sheet electrode 24 from the front of the plate 11 continuously advancing along the transport direction T.

The movement rollers 18 preferably comprise a fifth roller 54, a sixth roller 56, a seventh roller 58 and an eighth roller 60, rotatable about respective axes of rotation indicated by the references A5, A6, A7, A8. The axes of rotation A5, A6, A7, A8 respectively of the fifth roller 54, the sixth roller 56, the seventh roller 58 and the eighth roller 60 are parallel to the transport plane P and perpendicular to a direction parallel to the transport direction T. The fifth roller 54 and the sixth roller 56 are aligned with each other along a direction parallel to the transport direction T. The seventh roller 58 and the eighth roller 60 are aligned with each other along a direction parallel to the transport direction T.

The fifth roller 54 and the seventh roller 58 support and engage the first conveyor 16 at its first return branch 20. The seventh roller 58 engages the inner surface of the first conveyor 16.

The fifth roller 54 is arranged downstream of the first roller 44 along the first transport path C1. The seventh roller 58 is arranged downstream of the fifth roller 54 along the first transport path C1.

As shown in figure 6, the fifth roller 54 engages an outer surface of the first conveyor 16. Furthermore, the fifth roller 54 is arranged further backward, parallel to the transport direction T, than the first roller 44. The arrangement of the fifth roller 54 causes the return branch 20 of the first conveyor 16 to assume, in the region comprised between the first and the seventh roller 44, 58 and extended around the fifth roller 54, a concave configuration.

More in detail, a distance R5 between the fifth axis of rotation A5 of the fifth roller 54 and the cutting plane C defined within the interspace 52 is greater than a distance R1 between the first axis of rotation A1 of the first roller 44 and the cutting plane C. Due to the recessed positioning, further backward parallel to the transport direction T, of the fifth roller 54 with respect to the first roller 44, the first conveyor 16 comprises a first folded section 57 that extends, between said first and fifth roller 44, 54, parallel to the first active branch 14, disregarding the curved portions of the first conveyor 16 wound around the first and fifth rollers 44, 54.

The mutual positioning between the first roller 44 and the fifth roller 54 is fixed, therefore the length and the orientation of the first folded section 57 of the first conveyor 16 are fixed.

The first conveyor 16 further comprises a first buffer section 59 extended between the fifth roller 54 and the seventh roller 58.

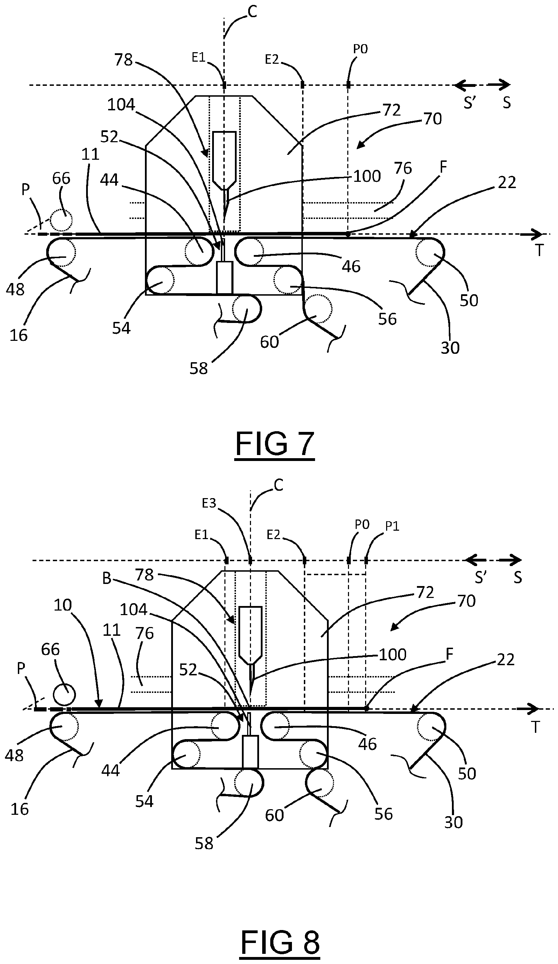

As will be detailed below, the mutual positioning between the fifth roller 54 and the seventh roller 58 is variable during the operation of the apparatus 1, therefore the length and the orientation of the first buffer section 59 are variable. In figures 1-2 and 5-6 the first buffer section 59 is shown extended substantially parallel to the first folded section 57 and to the first active branch 14, but in other operating configurations (see for example the diagrams of figures 7-10) the shape of the first buffer section 59 could be different.

The sixth roller 56 and the eighth roller 60 support and engage the second conveyor 30 at its second return branch 36. The eighth roller 60 engages the inner surface of the second conveyor 30.

The sixth roller 56 is arranged upstream of the second roller 46 along the second transport path C2. The eighth roller 60 is arranged upstream of the sixth roller 56 along the second transport path C2.

As shown in figure 6, the sixth roller 56 engages an outer surface of the second conveyor 30. Further, the sixth roller 56 is arranged more advanced, parallel to the transport direction T, than the second roller 46. The arrangement of the sixth roller 56 causes the return branch 36 of the second conveyor 30 to assume, in the region comprised between the second and the eighth roller 46, 60 and extended around the sixth roller 56, a concave configuration.

More in detail, a distance R6 between the sixth axis of rotation A6 of the sixth roller 56 and the cutting plane C defined within the interspace is greater than a distance R2 between the second axis of rotation A2 of the second roller 46 and the cutting plane C. Due to the recessed positioning, in this case more advanced parallel to the transport direction T, of the sixth roller 56 with respect to the second roller 46, the second conveyor 30 comprises a second folded section 61, which preferably extends, between said second and sixth rollers 46, 56, parallel to the second active branch 32, disregarding the curved portions of the second conveyor 30 wound around the second and sixth rollers 46, 56.

The mutual positioning between the second roller 46 and the sixth roller 56 is fixed, therefore the length and the orientation of the second folded section 61 are fixed.

The second conveyor 30 further comprises a second buffer section 63 extended between the sixth roller 56 and the eighth roller 60.

As detailed below, the mutual positioning between the sixth roller 56 and the eighth roller 60 is variable during the operation of the apparatus 1, therefore the length and the orientation of the second buffer section 63 are variable. In figures 1-2 and 5-6 the second buffer section 63 is shown extended parallel to the second folded section 61 and to the second active branch 32, but in other operating configurations (see for example the diagrams of figures 7-10) the shape of the second buffer section 63 could be different.

The movement rollers 18 preferably comprise a ninth roller 62 and a tenth roller 64, rotatable about respective axes of rotation indicated by the references A9, A10. The axes of rotation A9, A10 of the ninth roller 62 and the tenth roller 64 are parallel to the transport plane P and perpendicular to a direction parallel to the transport direction T.

The ninth roller 62 supports and engages the first conveyor 16 at its first return branch 20. The ninth roller 62 engages the inner surface of the first conveyor 16. The ninth roller 62 is arranged along the first transport path C1 downstream of the seventh roller 58 and upstream of the third roller 48, at which the first transport path C1 ends and restarts.

The tenth roller 64 supports and engages the second conveyor 30 at its second return branch 36. The tenth roller 64 engages the inner surface of the second conveyor 30. The tenth roller 64 is arranged along the second transport path C2 upstream of the eighth roller 60 and downstream of the fourth roller 50.

Preferably, as illustrated in the figures, the apparatus 1 comprises a support roller 66 rotatable about an axis A11 parallel to the transport plane P and perpendicular to a direction parallel to the transport direction T.

The support roller 66 is arranged at the first inlet 12 of the first transport direction 10. The axis A11 of the support roller 66 is aligned with the axis A3 of the third roller 48 along a direction perpendicular to the transport direction T.

The support roller 66 is brought close to the transport plane P so as to contact the continuous electrode plate 11 and facilitate its access to the first transport direction 10 through the first inlet 12.

Based on their positioning along the first or second transport path C1, C2 and/or their idle or driving configuration, the movement rollers 18 and/or the inlet roller 66 can be constituted by a cylindrical body with a substantially constant outer radius throughout its axial extension, such as for example the eighth roller 60 and the inlet roller 66, figure 1; or, alternatively, they can be constituted by separate cylindrical modules of lower axial extension distributed along the respective axis (such as for example the tenth roller 64, partially visible in figure 1).

The outer surfaces of the movement rollers 18 may be at least partially machined, rubberized, or provided with gaskets to facilitate the meshing with the first conveyor 16 or the second conveyor 30. For example, the seventh roller 58 and the eighth roller 60 comprise an axial toothing 68 (figure 1) adapted to cooperate with corresponding toothings 70, 71 (figure 3) made on at least part of the inner surfaces of the first conveyor 16 and of the second conveyor 30, respectively.

Preferably, the first roller 44, the second roller 46, the third roller 48, the fourth roller 50, the fifth roller 54, the sixth roller 56, the seventh roller 58, the eighth roller 60, the ninth roller 62 and the tenth roller 64 all have a substantially equal maximum outer radius, disregarding any differences due to the surface finish.

The third roller 48, the fourth roller 50, the seventh roller 58, the eighth roller 60, the ninth roller 62 and the tenth roller 64 are rotatably mounted on the main frame 2, preferably on protruding supports 3 made integral with or made in piece with the main frame 2, three of which are partially visible in figure 1.

The first roller 44, the second roller 46, the fifth roller 54 and the sixth roller 56 are rotatably mounted on a movable equipment 70 of the apparatus 1 slidably constrained to the main frame 2, as detailed below.

The first conveyor 16 is moved along the first transport path C1 by first drive members, preferably including one or more electric motors (not visible in the figures) and any transmission members adapted to impose a rotation on at least one of the third roller 48, the seventh roller 58, the ninth roller 62 and the support roller 66. Preferably, as in the illustrated case, the seventh roller 58 is motorized and the third roller 48, the ninth roller 62 and the support roller 66, as well as the first roller 44, are idle rollers. Preferably, the first drive members are also active on the support roller 66.

The first drive members are preferably configured to impose on the rollers acting on the first conveyor 16 - in the specific case on the seventh roller 58 - a constant rotation speed, so as to move the first conveyor 16 with a constant transport speed along the first transport path C1. In use of the apparatus 1, the continuous electrode plate 11 is therefore advanced between the first inlet 12 and the first outlet 26 of the first transport direction 10 at said constant transport speed.

The second conveyor 30 is moved along the second transport path C2 by second drive members, preferably including one or more electric motors (not visible in the figures) and any transmission members adapted to impose a rotation on at least one of the fourth roller 50, the eighth roller 60 and the tenth roller 64. Preferably, as in the illustrated case, the eighth roller 60 is motorized and the fourth roller 50 and the tenth roller 64, as well as the second roller 46, are idle rollers.

The second drive members are preferably configured to impose on the motorized rollers acting on the second conveyor 30 - in the specific case, on the eighth roller 60 - a variable speed profile in the cutting cycle.

Said speed profile preferably includes a first phase of accelerated motion and a second phase of motion at said constant transport speed. The duration of the phase of accelerated motion is preferably comprised between 0% and 50%, more preferably between 0% and 20%, even more preferably between 0% and 10% of the cutting cycle duration.

Preferably, the phase of accelerated motion is immediately subsequent to each cutting operation performed by the cutting device 78 within the interspace 52 between the first transport direction 10 and the second transport direction 22. In this way, immediately after cutting, the sheet electrode 24 is accelerated by the second transport direction 22 with respect to the rest of the plate 11, thus favouring the detachment of the cutting edges and quickly moving the sheet electrode 24 away from the region of the interspace 52. In this way jams of the front of the advancing plate 11 during the passage from the first transport direction 10 to the second transport direction 22 through the interspace 52 are avoided.

The apparatus 1 comprises the aforesaid movable equipment 70 slidably constrained to the main frame 2.

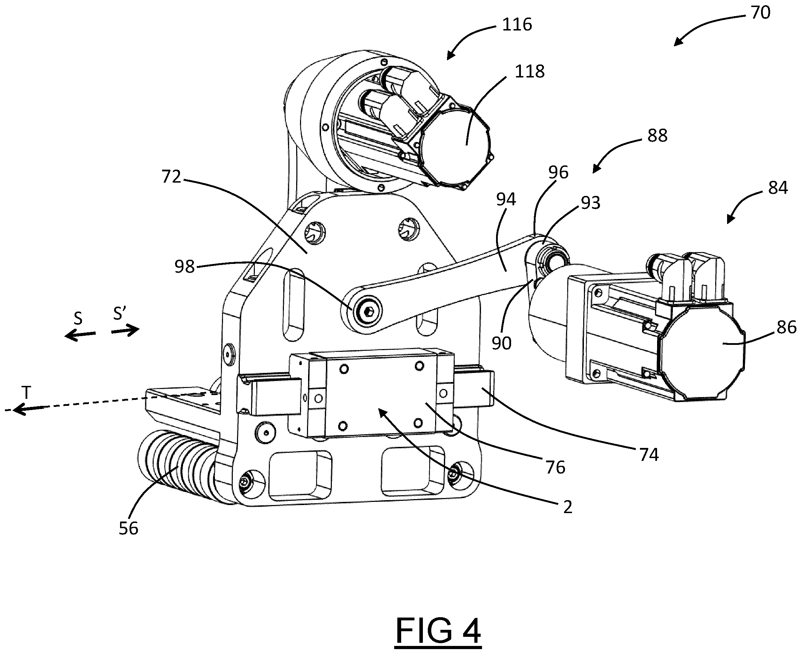

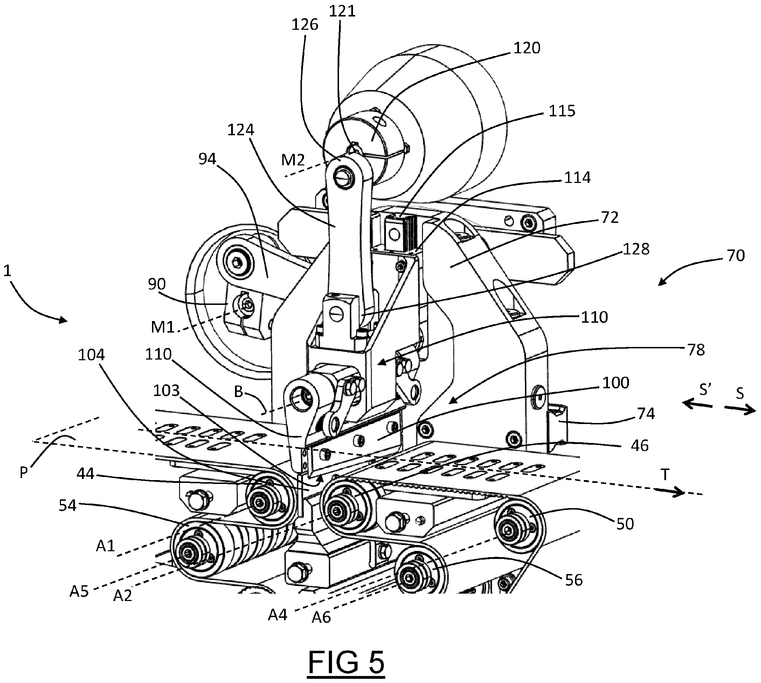

The movable equipment 70, as better visible in figures 4 and 5, comprises a movable frame 72 having a first track element 74 adapted to cooperate with a corresponding first sliding guide 76 integral with the main frame 2. Figure 4 illustrates components of the movable equipment 70 seen from a rear side thereof, removed from the main frame 2, which is removed from view with the exception of the aforesaid first sliding guide 76.

The first track element 74 of the movable frame 72 defines a forward direction S and a return direction S' for the movable equipment 70, parallel to the transport direction T, schematically indicated in the figures by arrows.

The movable equipment 70 is configured to shift along the forward direction S, with direction concordant with the transport direction T, by sliding the first track element 74 in the first sliding guide 76 of the main frame 2, between a first end position E1 and a second end position E2, indicated in the diagrams of figures 7-10. By convention, in figures 7-10 the position of the movable equipment 70 is designated at the position of the cutting plane C along which the cutting device 78 of the apparatus 1 is operational. The movable equipment 70 is then considered at the first or second end position E1, E2 when the cutting plane C is aligned with the first or second end position E1, E2, respectively.

The movable equipment 70 is further configured to shift along the return direction S', opposite with respect to the forward direction S, between the second end position E2 and the first end position E1.

The movable equipment 70 is moved in the forward direction S and in the return direction S' by means of third drive members 84. As illustrated in figures 3-4, the third drive members 84 include a first electric motor 86 having a first drive shaft 87 and the body of which is fixed to the main frame 2. The first electric motor 86 is operatively associated with a first kinematic mechanism 88 configured to transform the rotary motion of the first drive shaft 87 into a straight motion. The first kinematic mechanism 88 connects the first drive shaft 87 to the movable frame 72 of the movable equipment 70.

The first kinematic mechanism 88 is preferably a crank drive including a crank 90 and a first driving connecting rod 94. The crank 90 has a first end 92 (figure 3) pivoted to the first drive shaft 87 and a second end 93 which rotates about the axis of rotation M1 of the first drive shaft 87. The axis of rotation M1 of the first drive shaft 87 is parallel to the aforesaid cutting plane C along which the cutting device 78 operates.

The first driving connecting rod 94 comprises a third end 96 hinged to the second end 92 of the crank 90 and a fourth end 98 hinged to the movable frame 72, as shown in figure 4.

The rotational thrust imposed by the crank 90 is transferred from the first driving connecting rod 94 to the movable frame 72. Due to the sliding constraint between the movable frame 72 and the main frame 2, the movable equipment 70 and all the components integral therewith assume an alternating straight motion in the forward direction S and in the return direction S'.

As mentioned further above, the first roller 44, the second roller 46, the fifth roller 54 and the seventh roller 58 of the aforesaid movement rollers 18 are rotatably fixed to the movable frame 72 of the movable equipment 70, so as to shift the movable equipment 70 integrally in the forward direction S and in the return direction S' during the operation of the apparatus 1.

In other words, in use of the apparatus 1 the first outlet 13 of the first transport direction 10, the second inlet 26 of the second transport direction 22 and the interspace 52 defined between them shift integrally to the movable equipment 70 in the forward direction S and in the return direction S'.

Preferably, also the fifth roller 54 and the sixth roller 56 are rotatably fixed to the movable frame 72 of the movable equipment 70. Therefore, the first roller 44, the second roller 46, the fifth roller 54 and the sixth roller 56 are in a fixed mutual position and in a fixed position with respect to the movable equipment 70, also shifting integrally with the movable equipment 70 in the forward direction S and in the return direction S'.

The apparatus 1 comprises a cutting device 78, better visible in figures 3, 5 and 6.

The cutting device 78 comprises a cutting blade 100 having a first contact face 102 extended in the cutting plane C and preferably facing towards the return direction T'. The first contact face 102 is inferiorly delimited by a cutting profile 103 preferably straight and arranged obliquely, in the cutting plane C, with respect to the transport plane P.

The cutting blade 100 is movable along the cutting plane C towards and away from the transport plane P, between a rest position (configuration of figures 7-8 and 10) and a cutting position (configuration of figures 1-3, 5-6 and 9). The movement of the cutting blade 100 preferably follows a direction perpendicular to the transport plane P, coincident with the vertical direction in the figures.

The cutting device 78 further comprises a counter-blade 104, having a second contact face 106 extended in the cutting plane C and preferably facing towards the transport direction T. The counter-blade 104 is arranged on the second side with respect to the transport plane P and is arranged in a fixed position with respect to the cutting plane C. Preferably, an upper edge 108 of the counter-blade 104 is substantially flush with the transport plane T. As visible in figure 3, the opposite face of the counter-blade 104 with respect to the second contact face 106 is provided with a protruding element 105 bearing a lead-in surface 107 adapted to support the plate 11 in the passage through the region of the interspace 52 and facilitate its sliding above the upper edge 108 of the counter-blade 104.

In the rest position, the cutting blade 100 is located on a first side of the transport plane P, which in the case illustrated in the figures corresponds to the upper side, with the cutting profile 103 located at the maximum distance from the transport plane P and, consequently, from the upper edge 108 of the counter-blade 104.

In the cutting position, the cutting blade 100 is crossed by the transport direction T and the cutting profile 103 lies at least partly, preferably completely, on the second side with respect to the transport plane P, corresponding to the lower side in the figures. In this cutting position, the first contact face 102 of the cutting blade 100 is at least partially in contact with the second contact face 106 of the counter-blade 104.

In the passage between the rest position and the cutting position, the cutting blade 100 progressively crosses the plate 11 with the oblique cutting profile 103 cooperating with the upper edge 108 of the counter-blade 104, making a shear-type cut. In this way, a sheet electrode 24 is cut from the continuous electrode plate 11 (e.g., figure 1).

The cutting device 78 is mounted on the movable equipment 70 so as to shift integrally therewith along the transport direction T and along the return direction T'. In this way, the cutting plane C to which the cutting blade 100 and the counter-blade 104 are aligned can be shifted along the forward direction S and along the return direction S' integrally with the movable equipment 70. This allows the cutting device 70 to follow the electrode plate 11 for at least part of its advancement in the transport direction T, so as to be able to make the cut without the need to stop or slow down the plate 11.

The cutting blade 100 is fixed to a support element 110 connected to an articulated body 112 along an axis B (figure 5) parallel to the cutting plane C.

The articulated body 112 is slidably constrained to the movable frame 72 of the movable equipment 70. As visible for example in figure 5, the articulated body 112 comprises a second sliding guide 114 adapted to cooperate with a second track element 115 defining a sliding direction perpendicular to the transport plane T (figures 3, 5). The movement of the cutting blade 100 along the cutting plane C between the rest position and the cutting position is operated by fourth drive members 116 shown in figures 4 and 5.

The fourth drive members 116 preferably comprise a second electric motor 118 having a first drive shaft 121 and the body of which is fixed to the main frame 2. The second electric motor 118 is operatively associated with a second kinematic mechanism 120 configured to transform the rotary motion of the second drive shaft 121 into a straight motion. The second kinematic mechanism 120 connects the second drive shaft 121 to the articulated body 112 of the movable equipment 70.

The second kinematic mechanism 120 is preferably a crank drive including a cylindrical crank body 122 pivoted to the second drive shaft 121 and a second drive connecting rod 124.

The crank body 122 rotates about the axis of rotation M2 of the second drive shaft 121, which is parallel to the cutting plane C.

The second driving connecting rod 124 comprises a fifth end 126 eccentrically hinged on the crank body 122, and a sixth end 128 hinged to the articulated body 112, as shown in figures 3 and 5.

The rotational thrust imposed by the crank body 122 is transferred from the second driving connecting rod 124 to the articulated body 112. Due to the sliding constraint between the articulated body 112 and the movable frame 72, the cutting blade 100 follows an alternating rectilinear motion in a direction perpendicular to the transport plane P, parallel to the cutting plane C.

Preferably, the first drive members, adapted to move the first conveyor 16, the second drive members, adapted to move the second conveyor 30, the third drive members 84, adapted to move the movable equipment 70 and the fourth drive members 116, adapted to move the cutting blade 100, are controlled so as to operate synchronously in the cutting cycle, to obtain sheet electrodes 24 of the chosen length based on the set transport speed.

In particular, the first drive members, the second drive members and the third drive members 84 are preferably controlled so as to move the first conveyor, the second conveyor and the movable equipment at zero relative speed for at least one path section followed by the movable equipment 70, and in particular by the cutting plane C, the cutting blade 100 and the counter-blade 104, along the forward direction S.

This operating position is the position of the movable equipment at which the plate is cut by the cutting device. The operating position is the same for each cutting cycle and is determined as a function of the length of the sheet electrode 24 and the transport speed imposed on the first conveyor 16 and the second conveyor 30 by the first and second drive members.

Furthermore, the third drive members 84 and the fourth drive members 116 are preferably controlled so that at each cutting cycle the cutting blade 100 is in the cutting position at the instant when the cutting plane C is at said operating position along the forward direction S.

Preferably, moreover, the second drive members designed to move the second conveyor 30 are controlled so as to accelerate the second conveyor 30 in the instants immediately following the cutting operation, as set out above.

The sequence of figures 7-10 schematically illustrates the apparatus 1 for making sheet electrodes 24 at different successive time instants during its operation. The first conveyor 16 and the second conveyor 30 are partially illustrated for the sake of clarity of exposition.

In the configuration of figure 7, the continuous electrode plate 11 is advancing in the transport direction T, supported and transported by the first transport direction 10, defined on the first conveyor 16, and by the second transport direction 22, defined on the second conveyor 30. The plate 11 is thus astride the interspace 52 between the first transport direction 10 and the second transport direction 22. The front of the plate F, i.e. its further downstream end along the transport direction T, is located at the position indicated with P0.

The movable equipment 70 and the cutting plane C are located at the first end position E1 along the forward direction, the one comparatively closer to the first inlet 12 (see fig. 1) of the first transport surface 10. The first transport direction 10 has a minimum length and the second transport direction 22 has a maximum length.

The movable equipment 70 has zero speed at this instant. The cutting blade 100 is in the rest position, at the maximum distance from the transport plane P and therefore from the plate 11.

At a subsequent instant (figure 8), the movable equipment 70 has resumed shifting in the forward direction S, parallel to the transport direction T of the plate 11, and is transiting at an intermediate position E3 between the first end position E1 and the second end position E2. Meanwhile, the front F of the plate 11 is advanced in the transport direction T up to the position P0. The cutting blade 100 is still in the rest position.

The shift of the movable equipment 70 in the forward direction S causes the integral displacement of the cutting blade 100, of the cutting plane C, as well as of the first roller 44, of the second roller 46, of the interspace 52 defined between them and of the counter-blade 104 arranged in the interspace 52. The displacement of the interspace 52 in the forward direction S causes the elongation of the first transport direction 10 and a corresponding shortening of the second transport direction 22.

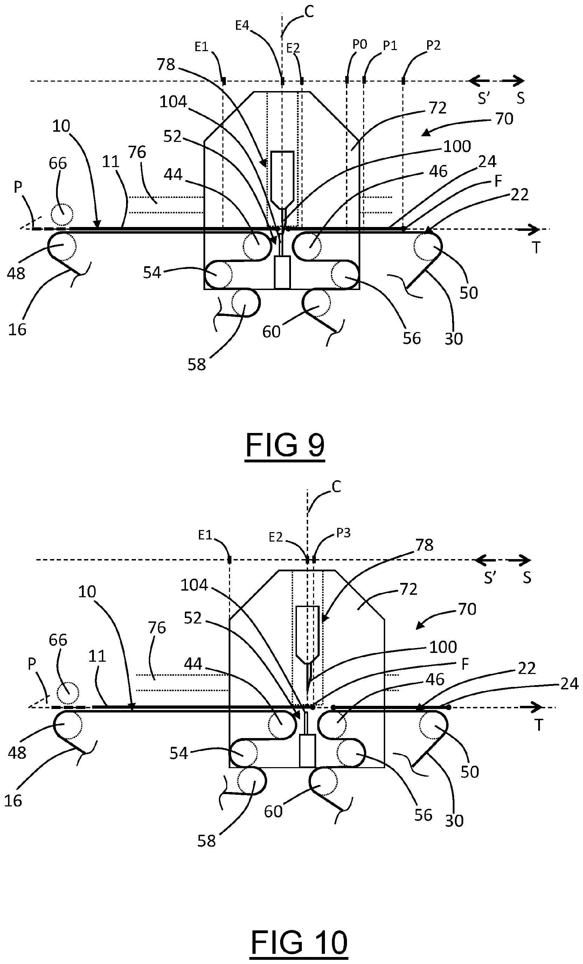

By continuing to shift in the forward direction S through a plurality of further intermediate positions (not illustrated), the movable equipment 70 and the cutting plane C integral therewith arrive at an operating position E4 comprised between the first end position E1 and the second end position E2, as illustrated in the diagram of figure 9. The front F of the plate 11 is advanced in the transport direction up to the position P2.

The instant depicted in figure 9, in which the cutting plane C is in the operating position E4, corresponds to that in which the cutting blade 100 has moved into the cutting position, separating a sheet electrode 24 from the plate 11. The downward movement of the cutting blade 100 has begun at an instant prior to that of figure 9 and subsequent to that of figure 8.

Advantageously, at the instant of figure 9 the plate 11 is advancing at the constant transport speed in the transport direction T and the movable equipment 70 is moving at the same transport speed along the forward direction S. The cutting of the sheet electrode 24 is therefore carried out without slowing down or stopping the plate.

Once the cut has been carried out, the movable equipment 70 and the cutting plane C integral therewith continue to shift in the forward direction S until they arrive at the second end position E2, the one comparatively closer to the second outlet 28 (see fig. 1) of the second transport surface 22 (configuration of figure 10). The first transport direction 10 has a maximum length and the second transport direction 22 has a minimum length.

In the passage from the configuration of figure 9 to that of figure 10, the cutting blade 100 has returned to the rest position. The movable equipment 70 has zero speed at this instant.

The sheet electrode 24 obtained from the cutting is advanced in the transport direction T by the second transport direction 22, preferably accelerated at least in the instants following the cutting to favour the detachment of the cutting edges and avoid jamming of the plate 11.

The new front F of the plate 11, corresponding to the cutting edge from which the sheet electrode 24 has been separated, is located at a position P3 along the forward direction S.

Subsequently, the movable equipment 70 resumes shifting in the return direction S' opposite to the forward direction, until it arrives again at the first end position E1 (configuration of figure 7) where it resumes a new cutting cycle.

Obviously, a person skilled in the art, in order to satisfy specific and contingent needs, can make numerous modifications and variations to the invention described above while remaining within the scope of protection defined by the following claims.

## Claims

1. Apparatus (1) for making sheet electrodes (24), said apparatus (1) comprising:
- a first transport surface (10) developing along a transport direction (T) between a first inlet (12) and a first outlet (13), configured to transport a continuous electrode plate (11) along the transport direction (T),
a second transport surface (22) developing along said transport direction (T) between a second inlet (26) and a second outlet, configured to transport sheet electrodes (24) along the transport direction (T),
wherein said first transport surface (10) precedes, along the transport direction (T), said second transport surface (22) and wherein the first outlet (13) of the first transport surface (10) and the second inlet (26) of the second transport surface (22) are spaced apart from each other along the transport direction (T) by an interspace (52),
a cutting device (78) configured to cut the continuous electrode plate (11) into sheet electrodes (24), comprising a cutting blade (100) that cooperates with a counter-blade (104), said cutting blade (100) and said counter-blade (104) being aligned with a cutting plane (C) perpendicular to the transport direction (T),
wherein the counter-blade (104) is arranged in said interspace (52) and wherein the cutting blade (100) is movable along the cutting plane (C) towards and away from said counter-blade (104),
wherein the cutting blade (100) is further movable in a forward direction (S) parallel to and with direction concordant with the transport direction (T) in order to move the cutting plane (C) along said forward direction (S), and
wherein the first outlet (13) of the first transport surface (10) and the second inlet (26) of the second transport surface (22) are movable along the forward direction (S) in order to displace the interspace (52) and the counter-blade (104) along the forward direction (S) while keeping the counter-blade (104) aligned with the cutting plane (C).

2. Apparatus (1) according to claim 1, wherein the cutting blade (100) is movable parallel to a return direction (S') that is opposite with respect to said forward direction (S) in order to move the cutting plane (C) along said return direction (S'), and
wherein the first outlet (13) of the first transport surface (10) and the second inlet (26) of the second transport surface (22) are movable along the return direction (S') in order to displace the interspace (52) and the counter-blade (104) along said return direction (S') while keeping the counter-blade (104) aligned with the cutting plane (C).

3. Apparatus (1) according to any one of the preceding claims, comprising a movable equipment (70) slidably constrained to a main frame (2) arranged in a fixed position, said movable equipment (70) being configured to shift along said forward direction (S) between a first end position (E1) to a second end position (E2) which are defined between the first inlet (12) of the first transport surface (10) and the second outlet of the second transport surface (22),
wherein the cutting blade (100) and the counter-blade (104) are fixed to the movable equipment (70) so as to shift integrally therewith in the forward direction (S) and in the return direction (S').

4. Apparatus (1) according to claim 3, wherein the first transport surface (10) and the second transport surface (22) have respective variable first and second lengths along the transport direction (T),
wherein the first length of the first transport surface (10) is minimum and the second length of the second transport surface (22) is maximum when the movable equipment (70) is at the first end position (E1), and wherein the first length is maximum and the second length is minimum when the movable equipment (70) is at the second end position (E2).

5. Apparatus (1) according to any one of the preceding claims, wherein the first transport surface (10) is supported by a first roller (44) rotatable about a first axis of rotation (A1), and the second transport surface (22) is supported by a second roller (46) rotatable about a second axis of rotation (A2), the first and second axes of rotation (A1, A2) being parallel to the transport plane and perpendicular to a direction parallel to the transport direction (T).
wherein the first roller (44) engages the first transport surface (10) at its first outlet (13) and the second roller (46) engages the second transport surface (22) at its second inlet (26), and
wherein said interspace (52) is defined in the transport direction (T) between said first roller (44) and said second roller (46).

6. Apparatus (1) according to claim 5 when dependent on claim 3, wherein the first roller (44) and the second roller (46) are rotatably fixed to the movable equipment (70), so as to shift integrally therewith in the forward direction (S) and in the return direction (S'), and wherein said interspace (52) has a fixed minimum amplitude (D) measured parallel to the transport direction (T).

7. Apparatus (1) according to any one of claims 3-6, comprising a third roller (48) rotatable about a third axis of rotation (A3) and a fourth roller (50) rotatable about a fourth axis of rotation (A4), said third and fourth axes of rotation (A3, A4) being parallel to the transport plane and perpendicular to a direction parallel to the transport direction (T),
wherein the first transport surface (10) is supported by said third roller (48) at its first inlet (12) and the second transport surface (22) is supported by said fourth roller (50) at its second outlet,
wherein the third roller (48) and the fourth roller (50) are rotatably mounted on the main frame (2), and
wherein the first axis of rotation (A1), the second axis of rotation (A2), the third axis of rotation (A3) and the fourth axis of rotation (A4) are contained in a same plane parallel to the transport direction (T).

8. Apparatus (1) according to claim 7, comprising a first belt conveyor (16) wound in a closed loop and a second belt conveyor (30) wound in a closed loop,
wherein said first conveyor (16) comprises a first active branch (14), on which the first transport surface (10) is defined, and a first return branch (20) continuously joined to the first active branch (14), said first conveyor (16) being in engagement with the first roller (44) and with the third roller (48) at junctions between said first active branch (14) and said first return branch (20),
wherein said second conveyor (30) comprises a second active branch (32), on which the second transport surface (22) is defined, and a second return branch (36) continuously joined to the second active branch (32), said second conveyor (30) being in engagement with the second roller (46) and with the fourth roller (50) at junctions between said second active branch (32) and said second return branch (36).

9. Apparatus (1) according to claim 8, further comprising a fifth roller (54) rotatable about a fifth axis of rotation (A5) and a sixth roller (56) rotatable about a sixth axis of rotation (A6), the fifth and sixth axes of rotation (A5, A6) being perpendicular to a direction parallel to the transport direction (T),
wherein the fifth roller (54) and the sixth roller (56) are rotatably fixed to the movable equipment (70), so as to shift integrally therewith in the forward direction (S) and in the return direction (S'), and
wherein the first conveyor (16) is in engagement with said fifth roller (54) at the first return branch (20) and the second conveyor (30) is in engagement with said sixth roller (56) at the second return branch (36),
wherein the first return branch (20) of the first conveyor (16) comprises a first buffer section (59) with variable length extending downstream of said fifth roller (54), configured to compensate for length variations of the first active branch (14) of the first conveyor (16), and
wherein the second return branch (36) of the second conveyor (30) comprises a second buffer section (63) with variable length extending upstream of said sixth roller (56), configured to compensate for length variations of the second active branch (32) of the second conveyor (30).

10. Apparatus (1) according to any one of claims 8-9, comprising first drive members configured to move said first conveyor (16) along the first transport path (C1), said first drive members being controlled to impose on the first conveyor (16) a constant transport speed, and further comprising second drive members configured to move said second conveyor (30) along the second transport path (C2) and controlled to impose on the second conveyor (30) a periodic speed profile including a first phase of accelerated motion followed by a second phase at said constant transport speed, said second drive members being controlled synchronously with said first drive members.

11. Apparatus (1) according to any one of claim 10, comprising third drive members (84) configured to move the movable equipment (70) along the forward direction (S) and along the return direction (S') and controlled to impose on the movable equipment (70) said constant transport speed for at least one path section followed by the movable equipment (70) in the forward direction (S), said third drive members (84) being controlled synchronously with said first drive members and said second drive members.

12. Apparatus (1) according to any one of the preceding claims, wherein said cutting blade (100) is configured to shift along said cutting plane (C) between a rest position, at which it is on a first side with respect to a transport plane (P) tangent to the first transport surface (10) and to the second transport surface (22) at its first outlet (13) and its second inlet (26), and a cutting position, at which at least part of the cutting blade (100) is on a second side with respect to the transport plane (P), close to or in contact with the counter-blade (104).

13. Apparatus (1) according to claim 12, wherein said cutting blade (100) comprises a first contact face (102) extended in the cutting plane (C) and a cutting profile (103) that inferiorly delimits said first contact face (102), and
wherein the counter-blade (104) comprises a second contact face (106) and an upper edge (108) contained in or substantially flush with the transport plane (P),
wherein the first contact face (102) of the cutting blade (100) is configured to contact, when it is in the cutting position, the second contact face (106) of the counter-blade (104).

14. Apparatus (1) according to any one of the preceding claims, comprising fourth drive members (116) configured to move said cutting blade (100) along the cutting plane (C) between the rest position and the cutting position and controlled such that at each cutting cycle the cutting blade (100) is in the cutting position at the instant when the cutting plane (C) is at said operating position along the forward direction (S), said fourth drive members (116) being controlled synchronously with said first drive members, said second drive members and said third drive members (84).

15. Method for making sheet electrodes (24), comprising:
transporting a continuous electrode plate (11) with a first transport surface (10) between a first inlet (12) and a first outlet (13) along a transport direction (T),
cutting said continuous electrode plate (11) along a cutting plane (C) perpendicular to the transport direction (T) to obtain said sheet electrodes (24), and
transporting said sheet electrodes (24) with a second transport surface (22) between a second inlet (26) and a second outlet along said transport direction (T);
wherein said first transport surface (10) precedes, along said transport direction (T), said second transport surface (22) and wherein the first outlet (13) of the first transport surface (10) and the second inlet (26) of the second transport surface (22) are spaced apart from each other by an interspace (52),
wherein cutting said continuous electrode plate (11) to obtain sheet electrodes (24) is carried out in said interspace (52) between the first outlet (13) of the first transport surface (10) and the second inlet (26) of the second transport surface (22), and
wherein cutting said continuous plate (11) to obtain said sheet electrodes (24) is implemented by moving said cutting plane (C) in a forward direction (S) parallel to and with direction concordant with the transport direction (T) and by moving the first outlet (13) of the first transport surface (10) and the second inlet (26) of the second transport surface (22) in said forward direction (S).

16. Method according to claim 15, wherein transporting said continuous electrode plate (11) with the first transport surface (10) is implemented by moving said first transport surface (10) at a constant transport speed in the transport direction (T), and
wherein cutting said continuous electrode plate (11) is implemented by moving integrally in the forward direction, at said constant transport speed, the cutting plane (C), the first outlet (13) and the second inlet (26).
